# EUROPÄISCHE PATENTSCHRIFT

(11) **EP 0 972 288 B1**
(45) Veröffentlichungstag und Bekanntmachung des Hinweises auf die Patenterteilung: **03.08.2005**
(21) Anmeldenummer: 97951958.4
(22) Anmeldetag: 24.11.1997
(51) Int. Cl.: H01C 17/28, H01C 1/142

(54) **VERFAHREN ZUR HERSTELLUNG EINER SENSORANORDNUNG FÜR DIE TEMPERATURMESSUNG**
METHOD FOR PRODUCING A SENSOR ARRANGEMENT FOR MEASURING TEMPERATURE
PROCEDE POUR PRODUIRE UN DISPOSITIF DE DETECTION DESTINE A LA MESURE DE TEMPERATURES

(30) Priorität: 13.11.1997 DE 19750123
(43) Veröffentlichungstag der Anmeldung: 19.01.2000
(73) Patentinhaber: Heraeus Electro-Nite International N.V., 3530 Houthalen (BE)
(72) Erfinder: WIENAND, Karlheinz, D-63741 Aschaffenburg (DE); DIETMANN, Stefan, D-72221 Haiterbach (DE); SANDER, Margit, D-63791 Karlstein (DE)
(74) Vertreter: Kühn, Hans-Christian
(86) Internationale Anmeldenummer: PCT/EP1997/006552
(87) Internationale Veröffentlichungsnummer: WO 1999/026256

(56) Entgegenhaltungen:
- US-A- 4 031 272
- US-A- 4 140 817

## Beschreibung

Die Erfindung betrifft ein Verfahren zur Herstellung einer Sensoranordnung für die Temperaturmessung bestehend aus einem temperaturempfindlichen Meßwiderstand, der auf einem Keramiksubstrat einen dünnen Metallfilm als Widerstandsschicht und Kontaktflächen aufweist, wobei die Widerstandsschicht durch eine elektrisch isolierende Schutzschicht abgedeckt ist, die Kontaktflächen jedoch elektrisch leitend und direkt mechanisch fest mit elektrisch voneinander isolierten Leiterbahnen auf einem hochtemperaturfesten Trägerelement verbunden sind, wobei der Meßwiderstand an einem Ende des Trägerelementes kontaktiert wird und an dem dem Meßwiderstand abgekehrten Ende des Trägerelementes Kontaktflächen zum Anschluß eines Kontaktklipps, Steckers oder Kabels angeordnet sind.

Ein Verfahren zur Kontaktierung von elektrischen Leitern in Form von feinen Drähten oder Bändern mit elektrischen Leiterbahnen ist aus DE 34 24 387 A1 bekannt. Danach werden Pt-Drähte, die einen Durchmesser von circa 0,1 bis 0,5 mm aufweisen, mit den Leiterbahnen auf einem Keramiksubstrat elektrisch und mechanisch fest verbunden, indem eine Dickschichtpaste auf die Leiterbahnen auf dem Keramiksubstrat aufgebracht, die Drähte in diese Paste eingelegt und mit der Paste gemeinsam einen Einbrennprozeß durchlaufen.

Weiter sind zum Beispiel aus DE 39 39 165 C1 oder DG 87 16 103 U1 Platinen als Trägerelemente für passive oder aktive Bauelemente hinlänglich bekannt. Da die meisten Bauteile Anwendungen im Temperaturbereich bis maximal 150° C finden, ist auch das Platinenmaterial meist nur für diesen Temperaturbereich ausgelegt. In der Regel handelt es sich dabei um Kunststoffe, die oftmals mit anorganischen Materialien verstärkt sind. Soweit eine drahtlose Kontaktierung der Bauteile vorgesehen ist, wie dies beispielsweise auch bei Temperaturmeßwiderständen für die Anwendung als Wärmemengenfühler (DE 44 24 630 C1) üblich ist, erfolgt diese durch Weichlote oder/und mittels leitfähiger Kleber. Diese Verbindungstechniken auf Kunststoffplatinen sind jedoch für Temperaturen oberhalb 300° C vollkommen ungeeignet.

Aus DE 295 04 105 U1 ist eine Sensoranordnung , ebenfalls für die Wärmemengenmessung, bekannt, bei der ein kurzes (15 mm Länge) Keramikblättchen als Trägerelemente verwendet wird. Da auch hier die Anwendung als Wärmemengenfühler angegeben ist, ist davon auszugehen, daß die Kontaktierung mittels Weichlot vorgesehen ist, die ebenfalls nur eine maximale Einsatztemperatur von 300°C zuläßt.

Weitere Verfahren zur Herstellung von Sensoranordnungen mit Temperaturmeßwiderständen für die Hochtemperaturanwendung sind nach dem Stand der Technik, - dokumentiert z. B. in DGm 1 784 455 und DGm 1 855 262, -, so konzipiert, daß zunächst die Anschlußdrähte des Meßwiderstandes durch elektrisch isolierte Anschlußdrähte der Anschlußleitung verlängert werden. Die Verbindung von dem recht dünnen Anschlußdraht des Meßwiderstandes zum meist dickeren Anschlußdraht der Zuleitung wird durch Schweißen oder Hartlöten hergestellt. Wird eine Glasseide ummantelte Zuleitung verwendet, muß sie zunächst abisoliert werden. Um einen Kurzschluß während des Betriebszustandes aber auszuschließen, muß in irgendeiner Form eine elektrische Isolierung für die Anschlußdrähte des Meßwiderstandes und für den Bereich der Schweiß- oder Hartlotverbindung vorgesehen werden. Außerdem müssen die Anschlußdrähte entweder durch Vergußmassen oder durch spezielle keramische Formteile (siehe DGm 1 855 262) zugentlastet werden. Die elektrische Isolierung der Anschlußleitung für die Hochtemperaturanwendung wird entweder von keramischen Kapillarrohren erfüllt, die aber hohen Anteil an den gesamten Materialkosten haben und wegen ihrer geometrischen Abmessung einer Miniaturisierung oftmals im Wege stehen, - oder von Glasseideumhüllungen gewährleistet -, die herstellungsbedingt durch eine organische Tränkung versteift sind. Diese Tränkung muß in einem Extra-Ausheizprozeß entfernt werden. Zur Lagefixierung des Meßwiderstandes ist es darüber hinaus üblich, einen keramischen Kleber in die Spitze des Meßeinsatzschutzrohres einzubringen. Ein Hochtemperaturmeßeinsatz wird also nach dem Stand der Technik mit einer Vielzahl von Einzelteilen und Verfahrensschritten hergestellt, die entweder gar nicht oder nur mit gro-ßem Aufwand automatisierbar sind.

Demgegenüber liegt der Erfindung die Aufgabe zugrunde, ein aus wenigen standardisierten Einzelschritten bestehendes und aufgrund leicht automatisierbarer Prozeßschritte aus der SMD-Technik kostengünstiges Verfahren zur Herstellung einer Sensoranordnung anzugeben. Die Sensoranordnung soll zur Temperaturmessung oberhalb etwa 400° C geeignet sein.

Die nicht vorveröffentlichte EP 0 809 094 beschreibt ein Verfahren zur Herstellung einer Sensoranordnung für die Temperaturmessung mit einem temperaturempfindlichen Meßwiderstand, der auf einem Keramiksubstrat einen dünnen Metallfilm als Widerstandsschicht und Kontaktflächen aufweist, wobei die Widerstandsschicht durch eine elektrisch isolierende Schutzschicht abgedeckt ist und die Kontaktflächen elektrisch leitend und direkt mechanisch fest mit elektrisch voneinander isolierten Leiterbahnen auf einer hochtemperaturfesten Platine verbunden sind, wobei der Meßwiderstand an einem Ende der Platine kontaktiert wird und an dem dem Meßwiderstand abgekehrten Ende der Platine Kontaktflächen zum Anschluß eines Steckers oder Kabels angeordnet sind, dadurch gekennzeichnet, dass auf die Kontaktflächen für die Kontaktierung und die Befestigung des Meßwiderstandes unmittelbar vor dem Auflegen des Meßwiderstandes auf die hochtemperaturfeste Platine eine noch feuchte Dickfilmleitpaste auf die Platine aufgebracht wird, auf die der Meßwiderstand mit seinen freien Kontaktflächen aufgesetzt und bei Temperaturen bis 1000°C auf der Platine eingebrannt und damit kontaktiert und befestigt wird. In dieser Ausführung beträgt die maximale Einbrenntemperatur 1000°C.

Die Aufgabe wird erfindungsgemäß für das Verfahren zur Herstellung einer Sensoranordnung zur Temperaturmessung dadurch gelöst, daß auf die Kontaktfläche des Trägerelementes und /oder des Meßwiderstandes vor dem Auflegen des Meßwiderstandes auf das dafür vorgesehene hochtemperaturfeste Trägerelement mindestens eine Dickfilmleitpaste aufgebracht wird und dann der Meßwiderstand mit seinen Kontaktflächen auf das Trägerelement aufgesetzt und in einem Temperaturbereich zwischen 1000°C und 1350° C auf dem Trägerelement eingebrannt und damit kontaktiert und befestigt wird.

Das Aufbringen der Paste kann beispielsweise durch Siebdrucken, Dispensem oder Aufpinseln erfolgen. Anschließend wird der Meßwiderstand in sogenannter Flipchip-Technik kontaktiert, d. h. er wird mit seinen Kontaktflächen ("face down") auf die entsprechenden mit Dickfilmleitpaste vorbereiteten Kontaktflächen dem Trägerelement aufgesetzt und bei Temperaturen zwischen 1000°C und 1350°C eingebrannt. Zusätzliche Hilfsmittel zur Lagefixierung sind bei dem erfindungsgemäßen Verfahren nicht erforderlich, da die im Siebdruckverfahren aufgedruckte Dickfilmleitpaste ein annähemd rechteckiges Profil aufweist, so daß im Gegensatz zu der sphärischen Oberfläche von Lotpads der flache Meßwiderstand nach dem Auflegen in seiner Position bleibt. Dieses Verfahren bedarf weniger Einzelschritte und ist leicht automatisierbar.

Für die Kontaktflächen zur Kontaktierung,des Meßwiderstandes haben sich als kontaktbildende Schicht Dickfilmleitpasten aus PtPd, PtRh oder Pt bewährt. Um die Haftung zwischen den Kontaktflächen und dem Trägerelement bzw. dem Keramiksubstrat des Meßwiderstandes zu verbessern, hat es sich als vorteilhaft erwiesen, die Kontaktflächen mehrschichtig, als sogenanntes Dickfilmsystem, auszubilden, indem vorzugsweise zwei Dickfilmleitpasten nacheinander auf die Kontaktflächen aufgetragen werden, wobei die Dickfilmleitpaste für den ersten Auftrag auf die Kontaktflächen neben Pt, PtPd oder PtRh einen die Haftung zum Untergrund verbessernden Glasfritteanteil enthält, während die Paste für das wiederholte Auftragen neben Pt, PtPd oder PtRh und organischen Anpastmitteln keine Glasfritte enthalten muß. Der Glasfritteanteil in der ersten Dickfilmleitpaste liegt zwischen 0,5 und 20 Gew%. Da der Meßwiderstand als Standardbauteil häufig mit Platinkontaktflächen ausgestattet ist, liegt die Verwendung einer Platinpaste oder einer eine Platinlegierung enthaltende Paste nahe.

Zum Befestigen und Kontaktieren des Meßwiderstandes auf dem Trägerelement wird vorzugsweise eine Einbrenntemperatur bei 1200°C gewählt, wobei eine Haltezeit bei der Peaktemperatur von 15 Minuten zweckmäßig ist.

Das Aufsetzen des Meßwiderstandes auf die Kontaktflächen des Trägerelementes kann unmittelbar auf die noch feuchte Dickfilmleitpaste erfolgen oder aber erst nach einer Vortrocknung bei Temperaturen zwischen 50°C und 400°C und gegebenenfalls nach einer sich an die Vortrocknung anschließenden Vorsinterung der Dickfilmleitpaste bei einer Temperatur zwischen 1000°C und 1350°C, vorzugsweise bei 1200°C.

Das Bestücken des mit Leiterbahnen und Kontaktflächen vorbereiteten, vorzugsweise keramischen Trägerelementes erfolgt bevorzugt im Mehrfachnutzen mit SMD-Bestückungsautomaten. Vor der Zuführung zu dem Bestuckungsautomat werden die Kontaktflächen für den Meßwiderstand im Siebdruckverfahren mit einer Dickfilmleitpaste bedruckt. Auf diese Kontaktpads wird der Meßwiderstand so aufgesetzt, daß seine Kontaktflächen die Kontaktflächen auf dem Trägerelement bedecken. Anschließend werden die bestückten Trägerelemente getrocknet und in einem Durchlaufofen eingebrannt. Hierdurch wird sowohl eine mechanische Befestigung des Meßwiderstandes auf dem Trägerelement über die Kontaktflächen erzielt, als auch die elektrische Verbindung zwischen Meßwiderstand und den Zuleitungen auf dem Trägerelement hergestellt. Im Anschluß daran wird der Mehrfachnutzen vereinzelt, was mittels Brechen entlang vorgentzter Linien auf den Substratnutzen oder durch Sägen oder Lasern geschehen kann. Bei entsprechender Layout-Ausführung können auch die Meßwiderstände in einem zeilenförmigen Mehrfachnutzen auf den Platinenmehrfachnutzen aufgesetzt werden. In diesem Fall werden dann die Meßwiderstände gemeinsam mit den Trägerelemeten vereinzelt. Über eine elektrische Durchgangsprüfung, sinnvollerweise vor der Vereinzelung der bestückten Trägerelemente können fehlerhafte oder nicht voll funktionsfähige Sensoranordnungen ermittelt und gegebenenfalls aussortiert werden. Zur Vervollständigung zu einem Meßeinsatz benötigt man nun zu dem Herzstück der bestückten Trägerelementen nur noch wenige weitere Teile. Das Zusammenfügen dieser Teile ist mit sehr rationellen Fertigungstechniken leicht möglich. Das geschilderte Herstellungsverfahren läßt durchgängig einen hohen Automatisierungsgrad zu.

Die durch das erfindungsgemäße Verfahren hergestellte Sensoranordnung kann folgende konstruktive Merkmaie aufweisen:
Von dem Meßwiderstand aus, der die Kontaktflächen überbrückt, führen mindestens zwei Leiterbahnen an das andere Ende des Trägerelementes. wo sich ein weiteres Paar von Kontaktflächen für den Stecker- oder Kabelanschluß befindet. Als hochtemperaturfeste Werkstoffe für das Trägerelement kommen Keramik, Glas, Glaskeramik oder ein auf seiner Oberfläche elektrisch isoliertes Metall in Frage, wobei sich Aluminiumoxid (Al₂O₃) als übliches Substratmaterial für Dickfilm- oder Dünnfilmschaltungen bewährt hat. Darüber hinaus sind auch andere oxidkeramische oder nichtoxidische keramische Werkstoffe sowie eine breite Palette von Gläsern und Glaskeramiken geeignet, soweit sie den Anforderungen an den jeweiligen Temperaturbereich und der Temperaturwechselbeständigkeit genügen. Temperaturwechsel sind insofern zu berücksichtigen, als daß eine erfindungsgemäße Sensoranordnung beispielsweise zur Temperaturüberwachung eines Katalysators in einer Abgasanlage, z.B. eines Kraftfahrzeugs, verwendet wird. Das Material für die Leiterbahnen und die Kontaktflächen. die in Dickfilmoder/und Dünnfilmtechnik auf das vorzugsweise keramische Trägerelement aufgebracht werden muß ebenso den geschilderten Anforderungen entsprechen. Die Strukturierungsmöglichkeiten der Dick- und Dünnfilmtechnik erlauben eine kostengünstige Aufbringung der einfachen Schaltungsbilder im Mehrfachnutzen, wobei bei einer Substratfläche von 4 x 4 Zoll (=101,6 x 101,6 mm²) bis zu 38 Trägerelemente der Größe 101,6 x 2,54 mm² oder von 3 x 3 Zoll bis zu 38 Trägerelemente der Größe 38,1 x 3,81 mm² in einem Arbeitsgang metallisiert (und bestückt) werden können.

Wird für eine bestimmte Einbaulage eine besonders schmale Bauform der Sensoranordnung verlangt, so kann das keramische Trägerelement auf eine Breite von etwa 1 mm reduziert werden. In diesem Fall wird man die beiden Leiterbahnen und die Kontaktflächen für den Stecker- oder Kabelanschluß nicht mehr auf einer Seite des Trägerelementes unterbringen, sondern wird eine Leiterbahn und eine Steckerkontaktfläche auf der Rückseite des Trägerelementes anordnen. Mittels einer Durchkontaktierungsbohrung durch die Trägerplatine im Bereich des zu kontaktierenden Meßwiderstandes wird die Verbindung von der rückseitigen Zuleitungsleiterbahn zur entsprechenden Kontaktfläche für den Meßwiderstand hergestellt.

Die Sensoranordnung hergestellt nach dem erfindungsgemäßen Verfahren kann auch die Fixierung und Kontaktierung mehrerer Meßwiderstände auf einer Trägerplatine beinhalten, wodurch beispielsweise eine Baugruppe erhalten werden kann, die einen Wärmetönungssensor darstellt. Dabei wird mindestens einer von zwei Meßwiderständen von einer Katalysatorschicht überdeckt, an der mit einzelnen Gasbestandteilen im Abgasstrom eines Kraftfahrzeugs Reaktionen ablaufen, die eine Temperaturerhöhung hervorrufen. Die erhöhte Temperatur wird mit einer Referenztemperatur verglichen die unabhängig von den Gasbestandteilen des Abgases ist. Dadurch erhält man Aufschluß über die Abgaszusammensetzung und die Konzentration einzelner Abgasbestandteile.

Im folgenden wird der Gegenstand der Erfindung anhand eines Ausführungsbeispiels und der Figuren 1 bis 4 näher erläutert.

Dabei zeigt:
- Figur 1: eine Sensoranordnung auf einem Trägerelement,
- Figur 2: eine Sensoranordnung auf einem Trägerelement mit einer Durchkontaktierung,
- Figur 3a und 3b: je eine Sensoranordnung mit zwei Meßwiderständen, geeignet als Wärmetönungssensor
- Figur 4: eine Explosionszeichnung eines Temperaturmeßeinsatzes.

Das erfindungsgemäße Verfahren umfaßt beispielsweise folgende Abläufe:
Ein Aluminiumoxidsubstrat mit den Abmessungen 101,6 x 101,6 x 0,6 mm³ (ein 4 x 4 Zoll Standardsubstrat), 76,2 x 76,2 x 0,6 mm³ (3 x 3 Zoll) oder 50,8 x 50.8 x 0,6 mm³ (2 x 2 Zoll) weist parallele Laserritzungen im Abstand von 2,5 mm oder 3,8 mm auf. Auf einer Seite des Substrats sind in den durch die Laserritzung vorgegebenen Streifen je zwei Leiterbahnen aufgebracht. Diese Leiterbahnen sind in Dick- oder Dünnschichtverfahren aufgebracht und strukturiert worden. Sie bestehen im wesentlichen aus Pt oder PtPd oder PtRh. Dieses so vorbereitete keramische Substrat wird in die Aufnahme einer Siebdruckeinrichtung eingelegt. Durch eine entsprechend dimensionierte Siebmaske werden Kontaktflächen, vorzugsweise aus Platin, auf das Ende der Leiterbahnen aufgedruckt, wo der temperaturempfindliche Meßwiderstand aufgelegt werden soll. Die Abstände und Geometrien dieser Kontaktflächen richten sich nach den Abmessungen des zu plazierenden Meßwiderstandes. Für einen Meßwiderstand von der Größe 8 x 2 mm weisen die beiden 5 mm beabstandeten Kontaktflächen etwa die Abmessungen 2.5 x 1,5 mm auf. Das so mit Platinpads versehene Trägerelement wird aus der Siebdruckvorrichtung entnommen und einem SMD-Bestückungsautomat, wie beispielsweise einer sogenannte Pick-and-place-Maschine, zugeführt. Hier wird der Meßwiderstand, in der Regel "facedown", auf die noch feuchten Kontaktpads auf dem Trägerelement aufgelegt. Anschließend erfolgt eine Trocknung, vorzugsweise für 30 Minuten bei 150°C. Für den Einbrand kann ein Standardeinbrennprofil gewählt werden, was für eine übliche Platinpaste als Peaktemperatur 1200°C für 15 Minuten aufweist. Mit dieser Prozedur werden die Meßwiderstände auf dem keramischen Trägerelement befestigt und elektrisch kontaktiert. Es folgen nun Prüf- und Kontrollschritte, sowie die Vereinzelung der bestückten Trägerelemente aus dem Mehrfachnutzen in einzelne Trägerelemente durch eine Brechvorrichtung.

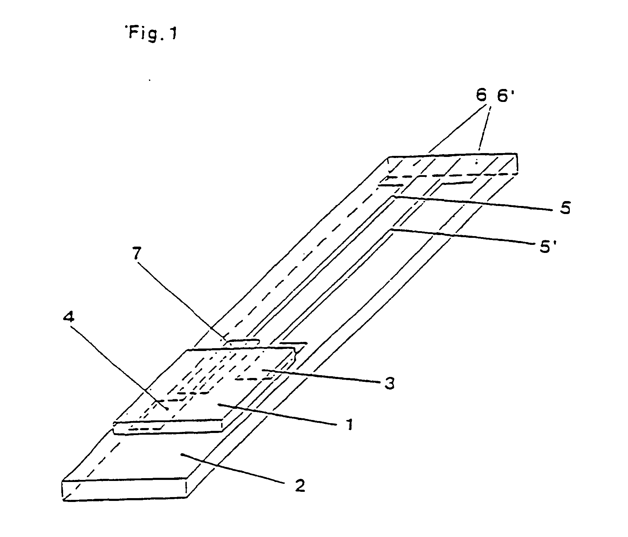

In Figur 1 ist eine Ausführungsform der mit dem erfindungsgemäßen Verfahren hergestellten Sensoranordnung zur Temperaturmessung dargestellt. Der flache Meßwiderstand 1 ist an einem Ende des Trägerelementes 2 aufgelegt. Die Kontaktflächen 3, 4 auf dem Trägerelement 2 entsprechen in ihren Geometrien und Abständen denen des Meßwiderstandes 1, der durch einen Fixiereinbrand gemeinsam mit der frisch aufgetragenen Dickfilmleitpaste (zum Beispiel eine Platinpaste) befestigt und kontaktiert ist. Die Leiterbahnen 5, 5' führen parallel nebeneinader zum kalten Ende des keramischen Trägerelementes 2, wo sie in Kontaktflächen 6, 6' für den Kontaktklipp-, Stecker- oder Kabelanschluß enden. Das Leiterbahnmaterial kann beispielsweise PtPd, PtRh oder Pt sein. Die oberste Schicht 3, 4, 6, 6' der Kontaktflächen besteht vorzugsweise aus einer Pt-Dickfilmpaste. Bei erhöhten Anforderungen hinsichtlich der Hochspannungsfestigkeit kann es ratsam sein, die Leiterbahnen 5, 5' mit einem Dielektrikum abzudecken. Außerdem ist es, um Nebenschlüsse am Meßwiderstand 1 auszuschließen, vorteilhaft - wie auch aus der Figur 1 zu erkennen - die Leiterbahn 5, die weiter an die Spitze der Trägerplatine führt und dort in einem Kontaktpad für den Meßwiderstand 1 endet zumindest in dem Bereich durch eine Abdeckschicht 7 zu isolieren, in dem die Leiterbahn den aufliegenden Flachmeßwiderstand tangiert. Nennwiderstände für dieses Bauteil können beispielsweise 100, 200, 500, 1000 oder 2000 Ohm sein, je nach dem wie die kundenspezifische Applikation es vorsieht. Typische Abmessungen für die beschriebene Trägerplatine 2 sind: Länge 101,6 mm, Breite 3 mm, Dicke 1 mm.

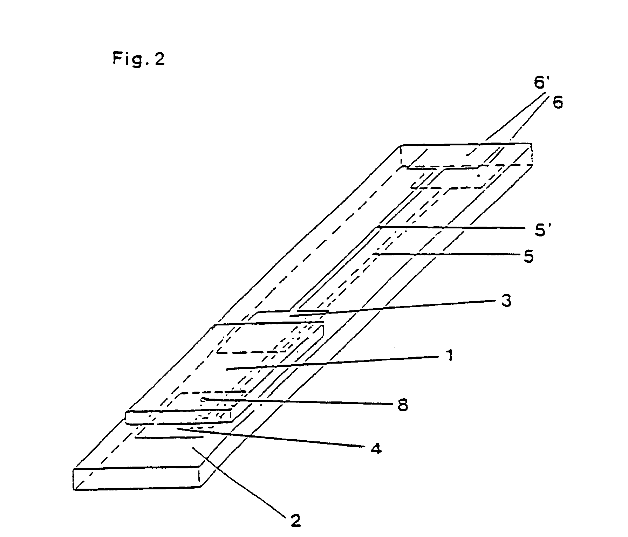

Figur 2 unterscheidet sich von Figur 1 hauptsächlich durch die Anordnung der beiden Zuleitungen 5, 5' und der jeweiligen Steckerkontaktflächen 6, 6'. Diese sind nicht auf einer Seite des Trägerelementes 2, sondern auf Vorder- und Rückseite der keramischen Trägerplatine 2 angeordnet. Die beiden Kontaktflächen 3, 4 für den Flachmeßwiderstand 1 sind jedoch wie im ersten Beispiel auf einer Seite des Trägerelementes 2, wobei die Verbindung zur rückseitigen Leiterbahn 5 durch eine Durchkontaktierungsbohrung 8 gewährleistet ist. Die Durchkontaktierung 8 liegt im Bereich der zweiten Kontaktfläche 4 für den Meßwiderstand 1. Eine isolierende Abdeckschicht für den vom Meßwiderstand 1 abgedeckten Bereich des Trägerelementes 2 ist hier nicht nötig. Darüber hinaus ermöglicht diese Konstruktion eine besonders schmale Sensoranordnung, die typischerweise folgende Abmessungen aufweist: für das Trägerelement 2: 101,6 x 1 x 1 mm. für den Flachmeßwiderstand 1 : 5 x 1 x 0.4 mm.

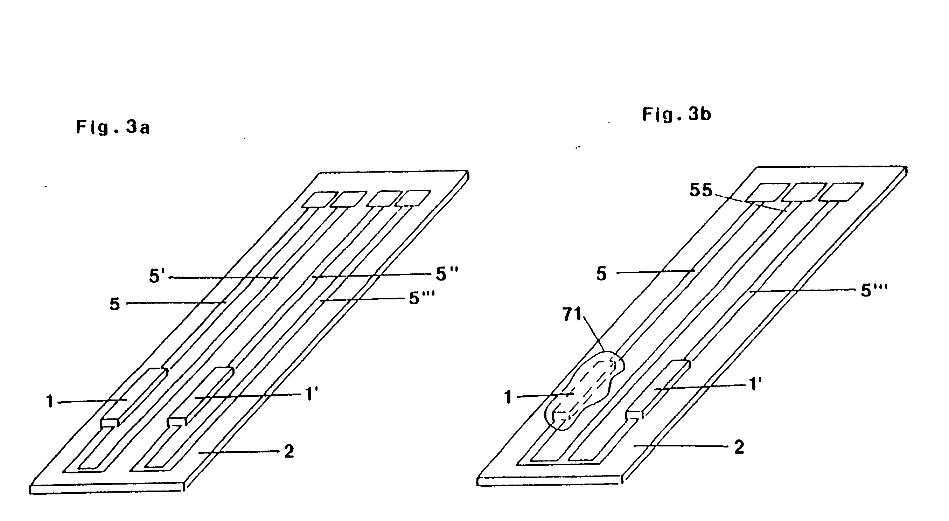

Figur 3a zeigt eine Mehrfachsensoranordnung, wobei hier zwei Meßwiderstände 1, 1' auf dem Trägerelement 2 kontaktiert und befestigt sind. Die Zuleitungen 5. 5', 5", 5'" sind einzeln, d.h. galvanisch getrennt zum Meßwiderstand 1 bzw. 1' geführt. Durch sogenannte Mittelanzapfung 55.wie in Figur 3b dargestellt, können auch zwei Zuleitungen zu einer zusammengefaßt werden. Der Meßwiderstand 1 ist gemäß Figur 3b mit einer katalytisch aktiven Schicht 71 überdeckt, an der bei Einsatz dieser Sensoranordnung im Abgasstrom beispielsweise eines Kraftfahrzeugs eine Umsetzung einzelner Gasbestandteile durch exotherme Reaktion stattfindet. Die damit verbundene erhöhte Temperatur wird durch den Meßwiderstand 1 erfaßt und mit dem Temperaturwert von Meßwiderstand 1', ohne katalytisch aktive Schicht verglichen. Die Sensoranordnung wird als Wärmetönungssensor bezeichnet.

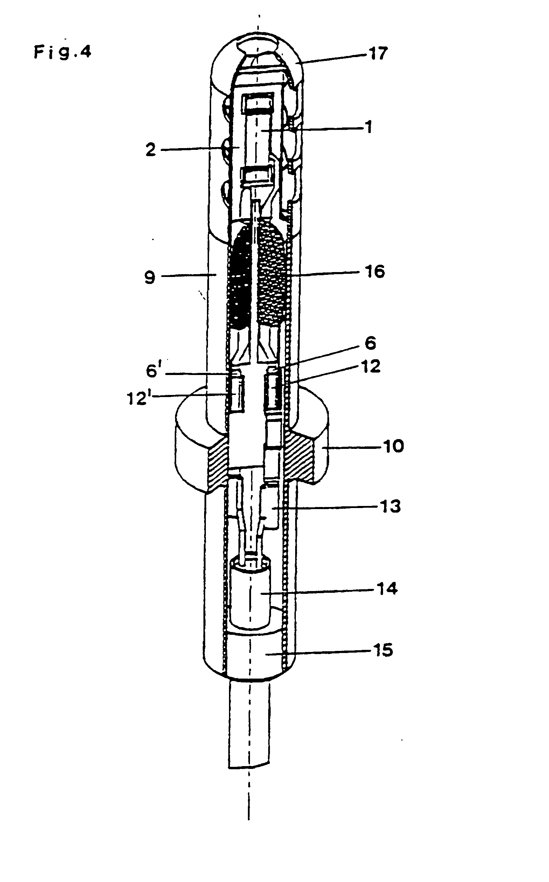

In Figur 4 ist die Anordnung eines bestückten Trägerelementes 2 in ein für den Einsatz in der Abgasleitung eines Kraftfahrzeugs geeigneten Thermometergehäuse dargestellt. Am "kalten" Ende des Trägerelementes 2 sind die Kontaktflächen 6, 6' mit zwei u-förmigen Halteteilen (Klipps) 12, 12' versehen, die eine Doppelfunktion haben, nämlich sowohl als elektrische Anschluß als auch der mechanischen Halterung der keramische Trägerplatine 2. Die zwei Halteteile 12, 12' werden parallel zur Längserstreckung des metallischen Schutzrohres 9 und auf die zwei Kontaktflächen 6, 6' am Trägerelement 2 aufgeschoben und mittels Laser angeschweißt. Die entgegengesetzte Seite des Halteteils weist ein konkaves Formteil 13 auf. Der weitere elektnsche Anschluß des Trägerelements 2 erfolgt mittels einer mineralisolierten Anschlußleitung 14, der an das konkave Formteil 13 angeschweißt wird. Das konkave Formteil 13 ist so ausgebildet, daß es genau an der mineralisolierten Anschlußleitung 14 anliegt und demzufolge auch angeschweißt werden kann. Die mineralisolierten Anschlußleitung 14 wird mit einer Buchse 15 versehen und außen am Schutzrohr 9 gasdicht laserverschweißt.
An dem Trägerelement sind zwei parallel zueinander angeordnete und federnde Drahtgestrickteile 16 angeordnet, die an der Innenseite des Schutzrohres 9 anliegen und die das Trägerelement 2 mechanisch unterstützten. Die unterschiedlichen Ausdehnungen zwischen metallischem Schutzrohr 9 und der keramischen Trägerplatine 2 werden durch diese Lösung ausgeglichen. Das Schutzrohr 9 weist einen Anschlagbund 10 auf, welcher die gewünschte Eintauchtiefe in das Auspuffrohr bestimmt und außen an das Auspuffrohr angeschweißt werden kann. Zur mechanischen Abschirmung der Sensoranordnung wird eine mit Öffnungen versehene Verschlußkappe 17 zuerst auf die Drahtgestrickteile 16 aufgeschoben und positioniert und danach außen an dem metallischen Schutzrohr 9 angeschweißt. Die Öffnungen gewährleisten, daß das zu messende Gas das sensorempfindliche Teil berühren kann. In einer weiteren Ausführung kann diese Verschlußkappe 17 ohne Öffnungen ausgebildet werden, wobei die Wärme durch eine wärmeleitfähige Füllrnasse von der Wand des Gehäuses auf den Meßwiderstand 1 übertragen wird. Die Füllmasse befindet sich dann zwischen Verschlußkappe 17 und Meßwiderstand 1.

## Patentansprüche

1. Verfahren zur Herstellung einer Sensoranordnung für die Temperaturmessung mit einem temperaturempfindlichen Meßwiderstand, der auf einem Keramiksubstrat einen dünnen Metallfilm als Widerstandsschicht und Kontaktflächen aufweist, wobei die Widerstandsschicht durch eine elektrisch isolierende Schutzschicht abgedeckt ist und die Kontaktflächen elektrisch leitend und direkt mechanisch fest mit elektrisch voneinander isolierten, hochtemperaturfesten Leiterbahnen auf einem hochtemperaturfesten, aus einem elektrisch isolierenden Werkstoff gebildeten Trägerelement verbunden sind, wobei der Meßwiderstand an einem Ende des Trägerelementes kontaktiert wird und an dem dem Meßwiderstand abgekehrten Ende des Trägerelementes Kontaktflächen zum Anschluß eines Kontaktklipps, Steckers oder Kabels angeordnet sind, wobei auf die Kontaktflächen (3, 4) des Trägerelementes (2) und /oder des Meßwiderstandes (1) vor dem Auflegen des Meßwiderstandes (1) auf das hochtemperaturfeste Trägerelement (2) mindestens eine Dickfilmleitpaste aufgebracht wird und dann der Meßwiderstand (1) mit seinen Kontaktflächen auf das Trägerelement (2) aufgesetzt und in einem Temperaturbereich zwischen 1000°C und 1 350°C auf dem Trägerelement (2) eingebrannt und damit kontaktiert und befestigt wird.

2. Verfahren zur Herstellung einer Sensoranordnung für die Temperaturmessung nach Anspruch 1, **dadurch gekennzeichnet, daß** die Kontaktflächen auf dem Meßwiderstand (1) und dem Trägerelement (2) jeweils durch zweimaliges Auftragen von Pt, PtPd oder PtRh enthaltenden Dickfilmleitpasten vorbereitet werden, wobei die Dickfilmleitpaste für den ersten Auftrag auf die Kontaktflächen des Meßwiderstandes (1) und /oder des Träger- elementes (2) neben Pt, PtPd oder PtRh einen Glasfritteanteil zwischen 0,5 und 20 Gew % enthält.

3. Verfahren zur Herstellung einer Sensoranordnung für die Temperaturmessung nach Anspruch 1 oder 2, **dadurch gekennzeichnet, daß** der Einbrand während einer Haltezeit von etwa 15 Minuten bei einer Temperatur von 1200°C erfolgt.

4. Verfahren zur Herstellung einer Sensoranordnung für die Temperaturmessung nach einem der Ansprüche 1 bis 3, **dadurch gekennzeichnet, daß** die auf die Kontaktflächen aufgebrachte Dickfilmleitpaste vor dem Auflegen des Meßwiderstandes (1) auf das Trägerelement (2) durch eine Temperaturbehandlung im Bereich zwischen 50°C und 400°C vorgetrocknet und /oder durch eine Temperaturbehandlung im Bereich zwischen 1000°C und 1350°C vorgesintert wird.

5. Verfahren zur Herstellung einer Sensoranordnung für die Temperaturmessung nach Anspruch 4, **dadurch gekennzeichnet, daß** die Vortrocknung während einer Haltezeit von etwa 30 Minuten bei 150°C und die Vorsinterung bei einer Haltezeit von etwa 15 Minuten bei 1200°C erfolgt.

## Claims

1. Method for producing a sensor arrangement for temperature measurement with a temperature-sensitive measuring resistor, which has, on a ceramic substrate, a thin metal film as a resistance layer and contact faces, wherein the resistance layer is covered by an electrically insulating protective layer and the contact faces are connected in an electrically conductive and directly mechanically rigid manner to high temperature-resistant conductor paths, which are electrically insulated from one another, on a high temperature-resistant carrier element formed from an electrically insulating material, wherein the measuring resistor is contacted at one end of the carrier element and contact faces for connecting a contact clip, plug or cable are arranged on the end of the carrier element remote from the measuring resistor, wherein at least one thick film conducting paste is applied to the contact faces (3, 4) of the carrier element (2) and/or of the measuring resistor (1) prior to placing the measuring resistor (1) on the high temperature-resistant carrier element (2) and the measuring resistor (1) is then placed with its contact faces on the carrier element (2) and fired in a temperature range between 1,000°C and 1,350°C on the carrier element (2) and thus contacted and fastened.

2. Method for producing a sensor arrangement for temperature measurement according to claim 1, **characterised in that** the contact faces on the measuring resistor (1) and the carrier element (2) are each prepared by the double application of thick film conducting pastes containing Pt, PtPd or PtRh, the thick film conducting paste for the first application on the contact faces of the measuring resistor (1) and/or of the carrier element (2), apart from Pt, PtPd or PtRh containing a fritted glass fraction between 0.5 and 20 % by weight.

3. Method for producing a sensor arrangement for temperature measurement according to claim 1 or 2, **characterised in that** the firing takes place for a holding time of about 15 minutes at a temperature of 1,200°C.

4. Method for producing a sensor arrangement for temperature measurement according to any one of claims 1 to 3, **characterised in that** the thick film conducting paste applied to the contact faces prior to the measuring resistor (1) being placed on the carrier element (2) is pre-dried by a temperature treatment in the range between 50°C and 400°C and/or is pre-sintered by a temperature treatment in the range between 1,000°C and 1,350°C.

5. Method for producing a sensor arrangement for temperature measurement according to claim 4, **characterised in that** the pre-drying takes place for a holding time of about 30 minutes at 150°C and the pre-sintering for a holding time of about 15 minutes at 1,200°C.

## Revendications

1. Procédé en vue de la fabrication d'un dispositif de capteur pour mesurer la température avec une résistance de précision sensible à la température, qui présente sur un substrat en céramique une fine pellicule métallique en tant que couche résistive et des surfaces de contact, dans lequel la couche résistive est recouverte par une couche de protection électriquement isolante et les surfaces de contact sont reliées de façon électriquement conductrice et directement mécaniquement à des pistes résistantes à des températures élevées électriquement isolées les unes des autres sur un élément support résistant aux températures élevées en un matériau électriquement isolant, dans lequel la résistance de précision est en contact à une extrémité de l'élément support et à l'extrémité de l'élément support opposée à la résistance de précision sont disposées des surfaces de contact en vue de la connexion d'un clip de contact, d'un connecteur ou d'un câble, dans lequel au moins une pâte conductrice à film épais est appliquée sur les surfaces de contact (3, 4) de l'élément support (2) et/ou de la résistance de précision (1) avant l'application de la résistance de précision (1) sur l'élément support résistant aux températures élevées (2) et ensuite la résistance de précision (1) est déposée avec ses surfaces de contact sur l'élément support (2) et est cuite sur l'élément support (2) dans une plage de température comprise entre 1000°C et 1350°C et ainsi vient en contact et est fixée.

2. Procédé en vue de la fabrication d'un dispositif de capteur pour mesurer la température selon la revendication 1, **caractérisé en ce que** les surfaces de contact sur la résistance de précision (1) et l'élément support (2) sont respectivement préparées par une double application de pâtes conductrices à film épais contenant Pt, PtPd ou PtRh, où la pâte conductrice à film épais contient, en plus de Pt, PtPd ou PtRh, un pourcentage de verre fritté compris entre 0,5 et 20 Gew % pour la première application sur les surfaces de contact de la résistance de précision (1) et/ou de l'élément support (2).

3. Procédé en vue de la fabrication d'un capteur de température pour mesurer la température selon la revendication 1 ou 2, **caractérisé en ce que** la cuisson se produit à une température de 1200°C pendant un temps d'arrêt d'environ 15 minutes.

4. Procédé en vue de la fabrication d'un capteur de température pour mesurer la température selon l'une des revendications 1 à 3, **caractérisé en ce que** la pâte conductrice à film épais appliquée sur les surfaces de contact avant l'application de la résistance de précision (1) sur l'élément support (2) est préséchée par un traitement thermique dans une plage comprise entre 50°C et 400°C et/ou est préfrittée par un traitement thermique dans une plage comprise entre 1000°C et 1350°C.

5. Procédé en vue de la fabrication d'un capteur de température pour mesurer la température selon la revendication 4, **caractérisé en ce que** le préséchage se produit à 150°C pendant un temps d'arrêt d'environ 30 minutes et le préfrittage se produit à 1200°C pendant un temps d'arrêt d'environ 15 minutes.
